# FASCICULE DE BREVET EUROPEEN

(11) **EP 4 310 005 B1**
(45) Date de publication et mention de la délivrance du brevet: **09.04.2025**
(21) Numéro de dépôt: 23186125.3
(22) Date de dépôt: 18.07.2023
(51) Int. Cl.: B64D 27/40, B64D 27/355, B64D 27/34

(54) **ENSEMBLE PROPULSIF À HÉLICE POUR AÉRONEF**
PROPELLERANTRIEBSANORDNUNG FÜR EIN FLUGZEUG
PROPELLER PROPULSION ASSEMBLY FOR AIRCRAFT

(30) Priorité: 22.07.2022 FR 2207562
(43) Date de publication de la demande: 24.01.2024
(73) Titulaire: AIRBUS OPERATIONS, 31060 Toulouse Cedex 9 (FR)
(72) Inventeur: MAHE, Mathieu, 31060 TOULOUSE (FR); LABARTHE, Christophe, 31060 TOULOUSE (FR); JOURNADE, Frédéric, 31060 TOULOUSE (FR); VINCHES, Frédéric, 31060 TOULOUSE (FR); ALVAREZ, Franck, 31060 TOULOUSE (FR); CZAPLA, Lionel, 31060 TOULOUSE (FR); VARDELLE, Emmanuel, 31060 TOULOUSE (FR); AMARGIER, Rémi, 31060 TOULOUSE (FR); FUKASAKU, Kotaro, 31060 TOULOUSE (FR)
(74) Mandataire: Cabinet Le Guen Maillet

(56) Documents cités:
- US-A- 6 131 848
- US-A1- 2007 145 182
- US-A1- 2008 053 099
- US-A1- 2015 336 680
- US-A1- 2021 078 719
- GARDINER GINGER: "Carbon fiber in pressure vessels for hydrogen | CompositesWorld", 23 October 2020 (2020-10-23), pages 1 - 15, XP055918568, Retrieved from the Internet <URL:https://www.compositesworld.com/articles/cfrp-pressure-vessels-for-hydrogen> [retrieved on 20220506]

## Description

### DOMAINE TECHNIQUE

La présente invention concerne un ensemble propulsif à hélice pour un aéronef, ledit ensemble propulsif comprenant un châssis fixé à une structure d'une voilure de l'aéronef et un système de propulsion constitué d'au moins un plateau portant au moins un équipement où le châssis présente une ouverture en partie basse et où le plateau se fixe au châssis à travers ladite ouverture. L'invention concerne également un aéronef comportant au moins un tel ensemble propulsif.

### ÉTAT DE LA TECHNIQUE ANTÉRIEURE

Afin de se déplacer, un aéronef comporte classiquement au moins un ensemble propulsif comprenant un système de propulsion arrangé dans une nacelle. Le système de propulsion comporte un châssis, un moteur fixé au châssis et une hélice entraînée en rotation par le moteur. Le châssis de la nacelle est fixé sous un mât qui est lui-même fixé sous une structure de la voilure de l'aéronef.

Le système de propulsion, et plus particulièrement le moteur, comporte de nombreux éléments qui sont fixés soit au mât, soit au châssis et ces éléments sont généralement imbriqués de manière complexe à l'intérieur du châssis.

Lors des opérations de maintenance de l'ensemble propulsif, le démontage des éléments peut être complexe du fait que les éléments à contrôler peuvent être fixés derrière d'autres éléments qui doivent être démontés avant d'accéder aux éléments à contrôler.

Le document US2021078719 A1 divulgue un ensemble propulsif de l'état de la technique.

### EXPOSÉ DE L'INVENTION

Un objet de la présente invention est de proposer un ensemble propulsif qui permet un démontage et un remontage aisés des éléments constituant le système de propulsion.

À cet effet, est proposé un ensemble propulsif pour un aéronef comportant :
- un châssis creux et présentant en partie basse une ouverture,
- un système de propulsion comportant les éléments propulsifs suivants : un moteur électrique sur l'arbre moteur duquel est montée une hélice, une pile à combustible qui alimente électriquement le moteur électrique, un réservoir qui alimente en dihydrogène la pile à combustible et un système de refroidissement, et
- au moins un plateau, où ledit ou chaque plateau est fixé audit châssis par des moyens de fixation et ferme ladite ouverture et où sur ledit ou chaque plateau est fixé au moins un élément propulsif du système de propulsion.

Avec un tel arrangement, il est facile de démonter chaque plateau par le dessous du châssis lors des opérations de maintenance.

Avantageusement, le châssis comporte une pluralité d'arches disposées les unes à la suite des autres et, entre deux arches successives, des poutres fixées par leurs extrémités aux deux arches successives, où chaque arche est ouverte vers le bas, et où pour deux arches successives, les deux extrémités inférieures bâbord des deux arches sont reliées par une poutre inférieure et les deux extrémités inférieures tribord des deux arches sont reliées par une autre poutre inférieure.

Avantageusement, le moyen de fixation prend la forme d'un étrier à deux pattes, chacune percée d'un alésage et solidaire du plateau, d'une languette solidaire du châssis et qui présente un alésage sphérique dans lequel est logée une sphère elle-même traversée par un alésage, et d'un boulon dont la tige filetée traverse chaque alésage.

Avantageusement, le moyen de fixation prend la forme d'une première languette percée d'un alésage et solidaire du plateau, d'une deuxième languette percée d'un alésage et solidaire du châssis, d'un bloc constitué d'un matériau souple, de deux tiges filetées solidaires dudit bloc et arrangées de manière coaxiale l'une par rapport à l'autre de part et d'autre du bloc et pour chaque tige filetée, d'un écrou qui se serre contre la languette correspondante.

Avantageusement, le moyen de fixation prend la forme d'une bielle à trois points de fixation où chaque point de fixation autorise une rotation autour d'un axe parallèle à une direction transversale de l'ensemble propulsif où la bielle est fixée par deux points de fixation au plateau et par un point de fixation au châssis.

Avantageusement, le moyen de fixation prend la forme d'une bielle à trois points de fixation où chaque point de fixation autorise une rotation autour d'un axe parallèle à une direction longitudinale de l'ensemble propulsif où la bielle est fixée par deux points de fixation au plateau et par un point de fixation au châssis.

Avantageusement, ledit ensemble propulsif comporte une nacelle constituée de capots et les moyens de fixation assurent également la fixation des capots au châssis.

Avantageusement, ledit ensemble propulsif comporte des moyens additionnels de fixation qui fixent directement les capots au plateau.

Avantageusement, le plateau est constitué de plusieurs sous-plateaux disposés les uns derrière les autres le long d'une direction longitudinale de l'ensemble propulsif et où chaque sous-plateau est fixé au châssis à l'aide de moyens de fixation.

Avantageusement, le moteur électrique avec l'hélice est porté par le sous-plateau le plus en avant.

L'invention propose également un aéronef comportant au moins un ensemble propulsif selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef comportant un ensemble propulsif selon l'invention,
Fig. 2 est une vue éclatée et en perspective d'un ensemble propulsif selon l'invention,
Fig. 3 est une représentation schématique vue de côté d'un ensemble propulsif selon un premier mode de réalisation de l'invention avec un plateau selon une première variante de l'invention,
Fig. 4 est une vue en coupe d'un système de fixation selon une première variante de réalisation de l'invention,
Fig. 5 est une vue en coupe d'un système de fixation selon une deuxième variante de réalisation de l'invention,
Fig. 6 est une représentation schématique vue de côté d'un ensemble propulsif selon un deuxième mode de réalisation de l'invention,
Fig. 7 est une représentation schématique vue de côté d'un ensemble propulsif selon un troisième mode de réalisation de l'invention,
Fig. 8 est une représentation schématique vue de côté d'un ensemble propulsif selon un quatrième mode de réalisation de l'invention,
Fig. 9 est une représentation schématique d'une vue en coupe par un plan horizontal de l'ensemble propulsif selon une variante de l'invention,
Fig. 10 est une représentation schématique d'une vue en coupe par un plan horizontal de l'ensemble propulsif selon une autre variante de l'invention,
Fig. 11 est une représentation schématique d'un plateau selon une deuxième variante de l'invention,
Fig. 12 est une représentation schématique d'un plateau selon une troisième variante de l'invention, et
Fig. 13 est une représentation schématique d'un plateau selon une quatrième variante de l'invention.

### EXPOSÉ DÉTAILLÉ DE MODES DE RÉALISATION

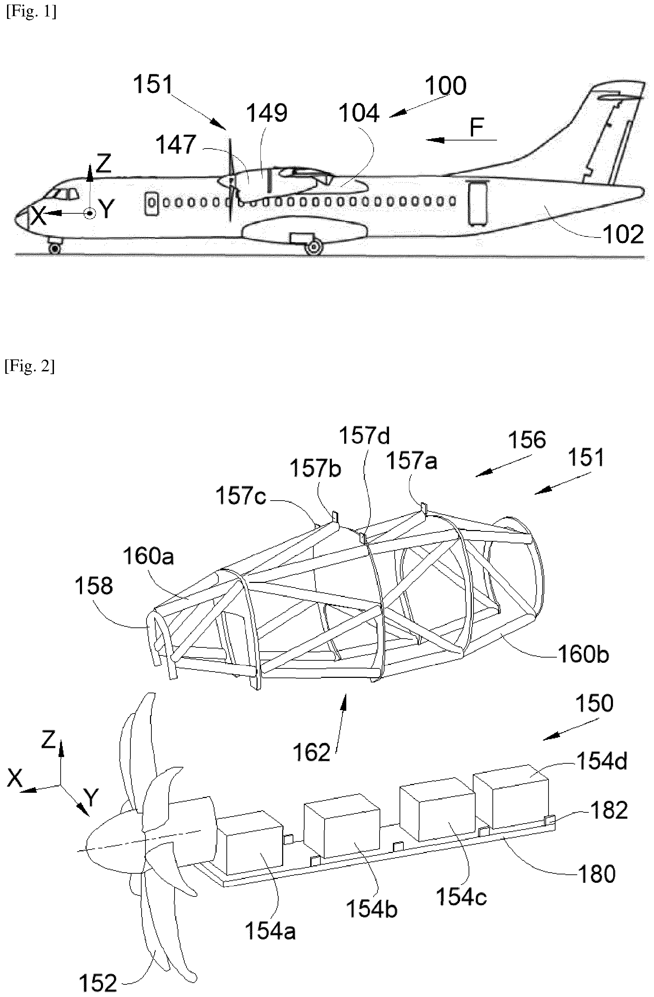

Dans la description qui suit, les termes relatifs à une position sont pris en référence à un aéronef en position d'avancement, c'est-à-dire comme il est représenté sur la Fig. 1 où la flèche F montre la direction d'avancement de l'aéronef.

Dans la description qui suit, et par convention, on appelle X la direction longitudinale qui correspond à l'axe de l'aéronef orienté positivement vers l'avant dans le sens d'avancement de l'aéronef, on appelle Y la direction transversale qui est horizontale lorsque l'aéronef est au sol, et Z la direction verticale ou hauteur verticale lorsque l'aéronef est au sol, ces trois directions X, Y et Z étant orthogonales entre elles.

La Fig. 1 montre un aéronef 100 qui présente un fuselage 102 de part et d'autre duquel est fixée une aile 104. Sous chaque aile 104 est fixé au moins un ensemble propulsif 151 qui comporte une nacelle 149 constituée de capots 147 formant une surface extérieure aérodynamique.

La Fig. 2 montre l'ensemble propulsif 151 sans la nacelle 149 et qui comporte également un système de propulsion 150 qui est en vue éclatée. L'ensemble propulsif 151 présente une direction longitudinale parallèle à la direction longitudinale X de l'aéronef 100, une direction transversale parallèle à la direction transversale Y de l'aéronef 100 et une direction verticale parallèle à la direction verticale Z de l'aéronef 100.

Le système de propulsion 150 comporte un moteur électrique 154a et une hélice 152 montée sur l'arbre du moteur électrique 154a et donc entraînée en rotation par ledit moteur électrique 154a. L'axe de rotation de l'hélice 152 est globalement parallèle à la direction longitudinale X.

L'ensemble propulsif 151 comporte également un châssis 156 s'étendant parallèlement à la direction longitudinale X et comportant des éléments structurels reliés entre eux pour former une cage.

Le châssis 156 constitue un mât fixé à une structure de l'aile 104 par des points de fixation 157a-d disposés en partie haute du châssis 156 et qui sont ici au nombre de quatre. Il y a un point de fixation arrière 157a qui est disposé à l'arrière du châssis 156 et compense les efforts en Z. Il y a un point de fixation avant 157b qui est à l'avant du point de fixation arrière 157a et qui compense les efforts Y. Il y a deux points de fixation latéraux 157c-d disposés de part et d'autre du point de fixation avant 157b et chacun compense les efforts en X et Z. Ces différents points de fixation ne font pas partie de l'invention et prennent toutes formes connues de l'homme du métier.

Les éléments structurels du châssis 156 comportent une pluralité d'arches 158, ici cinq, disposées les unes à la suite des autres le long de la direction longitudinale X et entre deux arches 158 successives, des poutres 160a-b fixées par leurs extrémités aux deux arches 158 successives.

Chaque arche 158 est ouverte vers le bas. Pour deux arches 158 successives, les deux extrémités inférieures bâbord des deux arches 158 sont reliées par une poutre inférieure 160b et les deux extrémités inférieures tribord des deux arches 158 sont reliées par une autre poutre inférieure 160b. Il n'y a pas de poutre qui relie une extrémité inférieure bâbord, respectivement tribord, d'une arche 158 à une extrémité inférieure tribord, respectivement tribord, de l'arche 158 suivante de manière à ne pas encombrer.

Il y a d'autres poutres 160a qui relient les arches 158 entre elles, au-dessus des poutres inférieures 160b, de manière à former un espace confiné et creux à l'intérieur du châssis 156.

Les poutres inférieures 160b et les arches 158 délimitent une ouverture 162 qui est ouverte vers le bas.

Dans le cas d'un aéronef 100 utilisant une pile à combustible, le système de propulsion 150 comporte également une pile à combustible 154b, un réservoir 154c contenant du dihydrogène, et un système de refroidissement 154d. Selon le cas, le système de propulsion 150 peut comporter d'autres éléments comme par exemple des systèmes d'approvisionnement en air, ...

Le système de propulsion 150 comporte ainsi les éléments propulsifs suivants : le moteur électrique 154a, la pile à combustible 154b, le réservoir 154c et le système de refroidissement 154d.

Classiquement, la pile à combustible 154b est alimentée en air et en dihydrogène depuis le réservoir 154c pour générer de l'électricité qui alimente le moteur électrique 154a. Le système de refroidissement 154d est conçu pour refroidir les différents éléments du système de propulsion 150. Ces différents éléments 154a-d sont connus de l'homme du métier et ne sont pas décrits plus précisément. Les différents câbles, conduites, etc., qui relient les différents éléments 154a-d entre eux ne sont pas représentés.

L'ensemble propulsif 151 comporte également au moins un plateau 180 et sur ledit ou chaque plateau est fixé au moins un élément propulsif 154a-d du système de propulsion 150 par tous moyens appropriés comme des éléments de visserie, des soudures, etc.

Dans le cadre de l'invention, le ou chaque plateau 180 équipé d'au moins un élément propulsif 154a-d est mis en place dans le châssis 156 depuis le bas en traversant l'ouverture 162 et il est fixé audit châssis 156 par des moyens de fixation 182. Chaque moyen de fixation 182 assure la fixation du plateau 180 à une arche 158 ou à une poutre 160a-b. Les moyens de fixation 182 sont répartis à bâbord et à tribord du plateau 180 et un tel arrangement permet également de renforcer structurellement le châssis 156.

Ainsi, d'une manière générale, le châssis 156 constitue une cage qui est creuse et présente en partie basse une ouverture 162 à travers laquelle le ou chaque plateau 180 équipé d'au moins un élément propulsif 154a-d est fixé, et il peut donc être introduit et retiré lors des opérations de maintenance à travers ladite ouverture 162 et où le ou chaque plateau 180 ferme l'ouverture 162 lorsqu'il est en place.

Le montage et le démontage des éléments 154a-d sont donc facilités par rapport à l'état de la technique. Lors du montage, le ou chaque plateau 180 équipé d'au moins un élément propulsif 154a-d effectue un mouvement ascendant et, lors du démontage, il effectue un mouvement descendant.

Dans le mode de réalisation de l'invention de la Fig. 1, il y a un seul plateau 180 qui porte tous les éléments propulsifs 154a-d du système de propulsion 150.

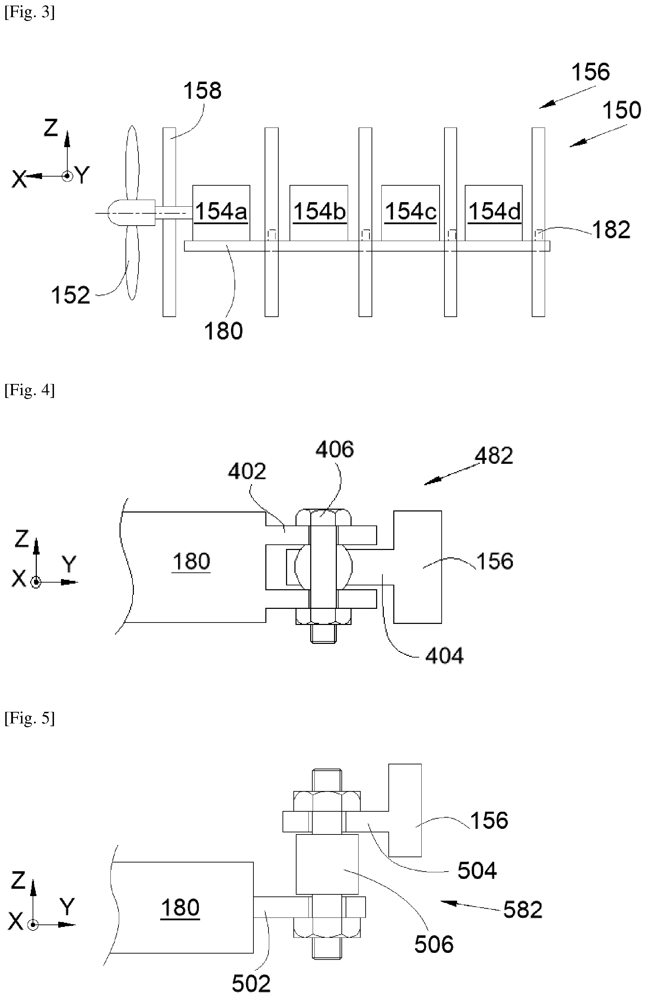

La Fig. 3 est une représentation schématique du premier mode de réalisation de l'invention avec un seul plateau 180 et où chaque moyen de fixation 182 (vu ici en traits pointillés) est fixé entre le plateau 180 et les arches 158. Dans ce mode de réalisation, il y a quatre moyens de fixation 182 à bâbord et quatre à tribord répartis sur la longueur du plateau 180.

Chaque moyen de fixation 182 peut être un système rigide, comme par exemple un système vis/écrou, des bielles, mais il peut être également un système souple. La Fig. 4 et la Fig. 5 montrent deux modes de réalisation particuliers de systèmes souples qui filtrent les vibrations.

Dans le cas de la Fig. 4, le moyen de fixation 482 prend la forme d'un étrier 402 à deux pattes et solidaire du plateau 180 et d'une languette 404 solidaire du châssis 156, c'est-à-dire d'une arche 158 ou d'une poutre 160a-b. La languette 404 présente un alésage sphérique dans lequel est logée une sphère elle-même traversée par un alésage. La languette 404 est introduite dans l'étrier 402 et le moyen de fixation 482 comporte également un boulon 406 qui traverse chaque patte de l'étrier 402 à travers des alésages prévus à cet effet et la sphère à travers l'alésage prévu à cet effet. La tige filetée du boulon 406 traverse ainsi chaque alésage et la tête de la vis et l'écrou sont en appui contre les pattes de l'étrier 402. La présence de la sphère permet de créer une liaison rotule entre le châssis 156 et le plateau 180. Les moyens de fixation 482 assurent une reprise des efforts en X, Y et Z.

Dans le cas de la Fig. 5, le moyen de fixation 582 prend la forme d'une première languette 502 solidaire du plateau 180 et d'une deuxième languette 504 solidaire du châssis 156, c'est-à-dire d'une arche 158 ou d'une poutre 160a-b. La première languette 502 et la deuxième languette 504 présentent chacune un alésage et le moyen de fixation 582 comporte un bloc 506 constitué d'un matériau souple comme le caoutchouc, et deux tiges filetées solidaires dudit bloc 506 et arrangées de manière coaxiale l'une par rapport à l'autre de part et d'autre du bloc 506. Chaque tige filetée est logée dans un des alésages des languettes 502 et 504 et reçoit un écrou qui se serre contre la languette 502, 504 correspondante. Les moyens de fixation 582 assurent une reprise des efforts en X, Y et Z.

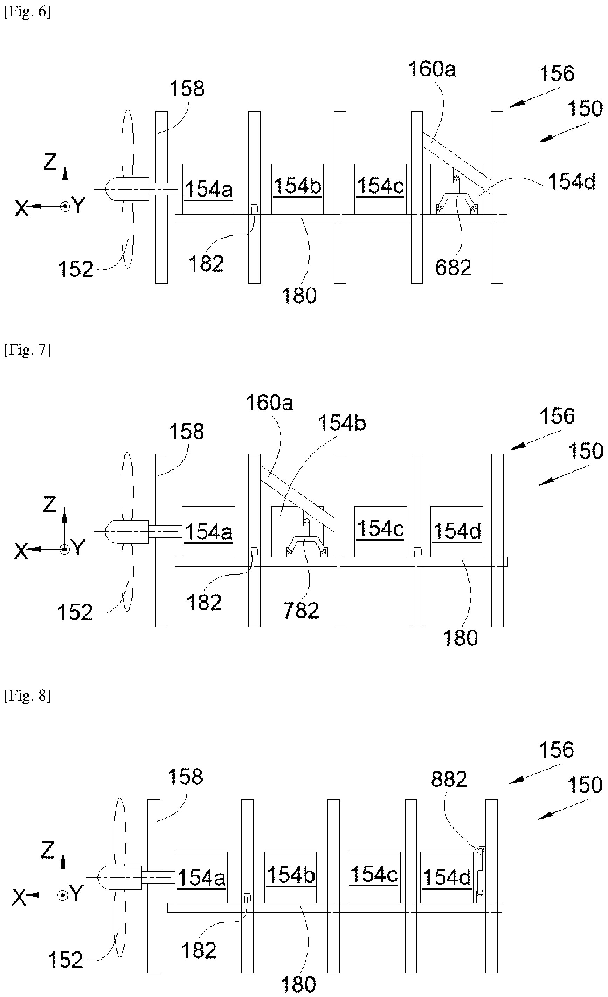

La Fig. 6 montre un deuxième mode de réalisation dans lequel le plateau 180 est fixé au châssis 156 par deux moyens de fixation 182 à l'avant (un à bâbord et un à tribord) et par deux moyens de fixation 682 à l'arrière (un à bâbord et un à tribord).

Les moyens de fixation 182 à l'avant peuvent être rigides ou souples comme ceux décrits aux Figs. 4 et 5 et assurent une reprise des efforts en X, Y et Z.

Chaque moyen de fixation 682 à l'arrière prend la forme d'une bielle à trois points de fixation où chaque point de fixation autorise une rotation autour d'un axe parallèle à la direction transversale de l'ensemble propulsif 151, c'est-à-dire horizontal et perpendiculaire à la direction longitudinale. La bielle est fixée par deux points de fixation au plateau 180 et par un point de fixation au châssis 156 ici au niveau d'une poutre 160a. Chaque moyen de fixation 682 assure une reprise des efforts en X et Z. Bien sûr un montage inverse est possible avec deux points de fixation au châssis 156 et un point de fixation au plateau 180.

La Fig. 7 montre un troisième mode de réalisation dans lequel le plateau 180 est fixé au châssis 156 par deux paires de moyens de fixation 182, une paire à l'avant et une paire à l'arrière et pour chaque paire, un moyen de fixation 182 à bâbord et un à tribord. La fixation est complétée par deux moyens de fixation 782 (un à bâbord et un à tribord) entre la paire à l'avant et la paire à l'arrière.

Les moyens de fixation 182 à l'avant et à l'arrière peuvent être rigides ou souples comme ceux décrits aux Figs. 4 et 5 et assurent une reprise des efforts en X, Y et Z.

Chaque moyen de fixation 782 intermédiaire prend la forme d'une bielle à trois points de fixation où chaque point de fixation autorise une rotation autour d'un axe parallèle à la direction transversale de l'ensemble propulsif 151, c'est-à-dire horizontal et perpendiculaire à la direction longitudinale. La bielle est fixée par deux points de fixation au plateau 180 et par un point de fixation au châssis 156 ici au niveau d'une poutre 160a. Chaque moyen de fixation 782 assure une reprise des efforts en X et Z. Bien sûr un montage inverse est possible avec deux points de fixation au châssis 156 et un point de fixation au plateau 180.

La Fig. 8 montre un quatrième mode de réalisation dans lequel le plateau 180 est fixé au châssis 156 par deux moyens de fixation 182 à l'avant (un à bâbord et un à tribord) et par un moyen de fixation 882 à l'arrière.

Les moyens de fixation 182 à l'avant peuvent être rigides ou souples comme ceux décrits aux Figs. 4 et 5 et assurent une reprise des efforts en X, Y et Z.

Le moyen de fixation 882 à l'arrière prend la forme d'une bielle à trois points de fixation où chaque point de fixation autorise une rotation autour d'un axe parallèle à la direction longitudinale de l'ensemble propulsif 151. La bielle est fixée par deux points de fixation au plateau 180 et par un point de fixation au châssis 156. Le moyen de fixation 882 assure une reprise des efforts en Y et Z. Bien sûr un montage inverse est possible avec deux points de fixation au châssis 156 et un point de fixation au plateau 180.

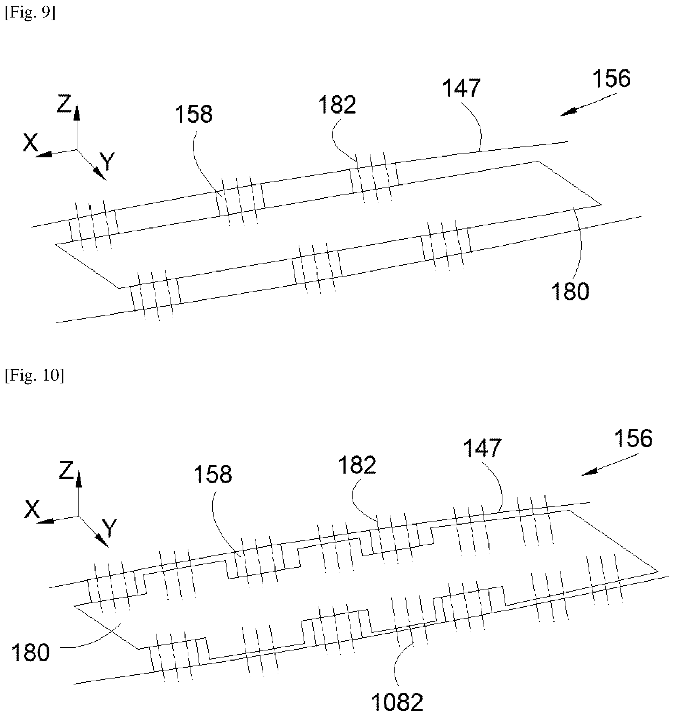

Dans le mode de réalisation de l'invention présenté à la Fig. 9, le plateau 180 est fixé au châssis 156 représenté ici par les arches 158 par des moyens de fixation 182 qui prennent ici la forme de rivets ou d'éléments de visserie comme un système vis/écrou et qui fixent simultanément le plateau 180 et les capots 147 de la nacelle 149 au châssis 156.

Le plateau 180 est ainsi logé à l'intérieur du châssis 156 et les capots 147 sont à l'extérieur du châssis 156.

Dans le mode de réalisation de l'invention présenté à la Fig. 10, le plateau 180 et les capots 147 de la nacelle 149 sont fixés au châssis 156 représenté ici par les arches 158 par des moyens de fixation 182 qui prennent ici la forme de rivets ou d'éléments de visserie comme un système vis/écrou et qui fixent simultanément le plateau 180 et les capots 147 de la nacelle 149 au châssis 156. L'ensemble propulsif 151 comporte également des moyens additionnels de fixation 1082 qui fixent directement les capots 147 au plateau 180 et qui prennent également ici la forme de rivets ou d'éléments de visserie comme un système vis/écrou.

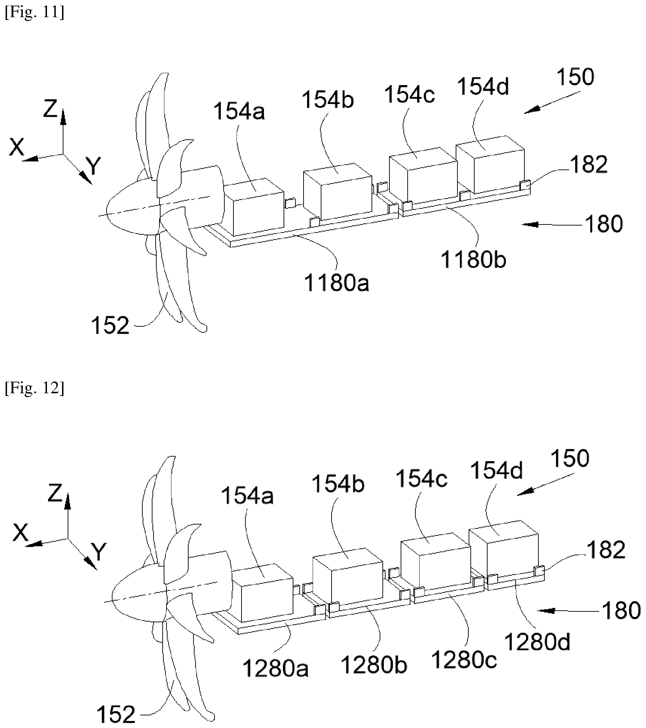

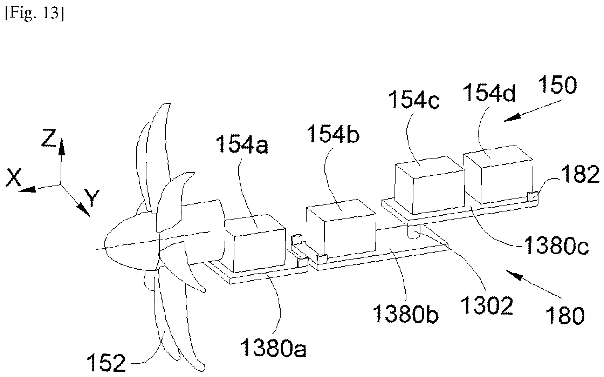

Dans les modes de réalisation décrits ci-dessus, il y a un seul plateau 180. Dans les modes de réalisation des Figs. 11 à 13, chaque plateau 180 est constitué de plusieurs sous-plateaux indépendants les uns des autres pour les Figs. 11 et 12 et reliés l'un à l'autre pour la Fig. 13. Chaque sous-plateau est fixé au châssis 156 par des moyens de fixation 182.

Sur les Figs. 11 à 13, les moyens de fixation 182 représentés sont disposés par paires avec un moyen de fixation 182 à bâbord et un à tribord de chaque sous-plateau, reprenant ainsi les moyens de fixation 482, 582 décrits aux Figs. 4 et 5, mais chaque moyen de fixation peut avoir une implantation différente et avoir une forme différente et prendre d'autres formes comme par exemple celles décrites aux Figs. 6 à 10.

Dans le mode de réalisation de l'invention présenté à la Fig. 11, le plateau 180 est constitué de deux sous-plateaux 1180a-b séparés l'un de l'autre et disposés l'un derrière l'autre dans le sens de la direction longitudinale. Sur chaque sous-plateau 1180a-b est fixé au moins un élément propulsif 154a-d du système de propulsion 150.

Dans le mode de réalisation de l'invention présenté à la Fig. 12, le plateau 180 est constitué de quatre sous-plateaux 1280a-d séparés les uns des autres et disposés les uns derrière les autres dans le sens de la direction longitudinale. Sur chaque sous-plateau 1280a-d est fixé au moins un élément propulsif 154a-d du système de propulsion 150.

Bien sûr, un nombre de sous-plateaux différent de deux et de quatre est possible.

Dans le mode de réalisation de l'invention présenté à la Fig. 13, le plateau 180 est constitué de trois sous-plateaux 1380a-c disposés les uns derrière les autres dans le sens de la direction longitudinale. Sur chaque sous-plateau 1380a-c est fixé au moins un élément propulsif 154a-d du système de propulsion 150. Le sous-plateau 1380a est séparé des autres sous-plateaux 1380b-c tandis que les deux autres sous-plateaux 1380c-d sont liés l'un à l'autre par une liaison pivot 1302 à axe vertical.

La séparation du plateau 180 en plusieurs sous-plateaux permet entre autres de séparer les éléments 154a-d générant le plus de vibrations des autres éléments, en particulier des éléments sensibles. Ici, l'élément générant le plus de vibrations est le moteur électrique 154a avec l'hélice 152 et est porté par le sous-plateau le plus en avant.

## Revendications

1. Ensemble propulsif (151) pour un aéronef (100) comportant :
- un châssis (156) creux et présentant en partie basse une ouverture (162),
- un système de propulsion (150) comportant les éléments propulsifs suivants : un moteur électrique (154a) sur l'arbre moteur duquel est montée une hélice (152), une pile à combustible (154b) qui alimente électriquement le moteur électrique (154a), un réservoir (154c) qui alimente en dihydrogène la pile à combustible (154b) et un système de refroidissement (154d), l'ensemble propulsif étant **caractérisé en ce qu'**il comporte en outre au moins un plateau (180), où ledit ou chaque plateau (180) est fixé audit châssis (156) par des moyens de fixation (182) et ferme ladite ouverture (162) et où sur ledit ou chaque plateau (180) est fixé au moins un élément propulsif (154a-d) du système de propulsion (150).

2. Ensemble propulsif (151) selon la revendication 1, **caractérisé en ce que** le châssis (156) comporte une pluralité d'arches (158) disposées les unes à la suite des autres et, entre deux arches (158) successives, des poutres (160a-b) fixées par leurs extrémités aux deux arches (158) successives, où chaque arche (158) est ouverte vers le bas, et où pour deux arches (158) successives, les deux extrémités inférieures bâbord des deux arches (158) sont reliées par une poutre inférieure (160b) et les deux extrémités inférieures tribord des deux arches (158) sont reliées par une autre poutre inférieure (160b).

3. Ensemble propulsif (151) selon l'une des revendications 1 ou 2, **caractérisé en ce que** le moyen de fixation (482) prend la forme d'un étrier (402) à deux pattes, chacune percée d'un alésage et solidaire du plateau (180), d'une languette (404) solidaire du châssis (156) et qui présente un alésage sphérique dans lequel est logée une sphère elle-même traversée par un alésage, et d'un boulon (406) dont la tige filetée traverse chaque alésage.

4. Ensemble propulsif (151) selon l'une des revendications 1 ou 2, **caractérisé en ce que** le moyen de fixation (582) prend la forme d'une première languette (502) percée d'un alésage et solidaire du plateau (180), d'une deuxième languette (504) percée d'un alésage et solidaire du châssis (156), d'un bloc (506) constitué d'un matériau souple, de deux tiges filetées solidaires dudit bloc (506) et arrangées de manière coaxiale l'une par rapport à l'autre de part et d'autre du bloc (506) et pour chaque tige filetée, d'un écrou qui se serre contre la languette (502, 504) correspondante.

5. Ensemble propulsif (151) selon l'une des revendications 1 ou 2, **caractérisé en ce que** le moyen de fixation (682, 782) prend la forme d'une bielle à trois points de fixation où chaque point de fixation autorise une rotation autour d'un axe parallèle à une direction transversale de l'ensemble propulsif (151) où la bielle est fixée par deux points de fixation au plateau (180) et par un point de fixation au châssis (156).

6. Ensemble propulsif (151) selon l'une des revendications 1 ou 2, **caractérisé en ce que** le moyen de fixation (882) prend la forme d'une bielle à trois points de fixation, où chaque point de fixation autorise une rotation autour d'un axe parallèle à une direction longitudinale de l'ensemble propulsif (151) où la bielle est fixée par deux points de fixation au plateau (180) et par un point de fixation au châssis (156).

7. Ensemble propulsif (151) selon l'une des revendications 1 à 6, **caractérisé en ce que** ledit ensemble propulsif (151) comporte une nacelle (149) constituée de capots (147) et **en ce que** les moyens de fixation (182) assurent également la fixation des capots (147) au châssis (156).

8. Ensemble propulsif (151) selon la revendication 7, **caractérisé en ce que** ledit ensemble propulsif (151) comporte des moyens additionnels de fixation (1082) qui fixent directement les capots (147) au plateau (180).

9. Ensemble propulsif (151) selon l'une des revendications 1 à 8, **caractérisé en ce que** le plateau (180) est constitué de plusieurs sous-plateaux disposés les uns derrière les autres le long d'une direction longitudinale de l'ensemble propulsif (151) et où chaque sous-plateau est fixé au châssis (156) à l'aide de moyens de fixation (182).

10. Ensemble propulsif (151) selon la revendication 9, **caractérisé en ce que** le moteur électrique (154a) avec l'hélice (152) est porté par le sous-plateau le plus en avant.

11. Aéronef (100) comportant au moins un ensemble propulsif (151) selon l'une des revendications précédentes.

## Patentansprüche

1. Antriebsanordnung (151) für ein Flugzeug (100), umfassend:
- einen hohlen Rahmen (156), der im unteren Teil eine Öffnung (162) aufweist,
- ein Antriebssystem (150), das die folgenden Antriebselemente umfasst: einen Elektromotor (154a), auf dessen Motorwelle ein Propeller (152) montiert ist, eine Brennstoffzelle (154b), die den Elektromotor (154a) mit Strom versorgt, einen Tank (154c), der die Brennstoffzelle (154b) mit Wasserstoff versorgt, und ein Kühlsystem (154d), wobei die Antriebsanordnung **dadurch gekennzeichnet ist, dass** sie ferner mindestens eine Platte (180) umfasst, wobei die oder jede Platte (180) durch Befestigungsmittel (182) an dem Rahmen (156) befestigt ist und die Öffnung (162) verschließt und wobei auf der oder jeder Platte (180) mindestens ein Antriebselement (154a-d) des Antriebssystems (150) befestigt ist.

2. Antriebsanordnung (151) nach Anspruch 1, **dadurch gekennzeichnet, dass** der Rahmen (156) eine Vielzahl von Bögen (158), die einer hinter dem anderen angeordnet sind, und zwischen zwei aufeinanderfolgenden Bögen (158) Träger (160a-b), die mit ihren Enden an den zwei aufeinanderfolgenden Bögen (158) befestigt sind, umfasst, wobei jeder Bogen (158) nach unten hin offen ist und wobei für zwei aufeinanderfolgende Bögen (158) die zwei backbordseitigen unteren Enden der zwei Bögen (158) durch einen unteren Träger (160b) verbunden sind und die zwei steuerbordseitigen unteren Enden der zwei Bögen (158) durch einen weiteren unteren Träger (160b) verbunden sind.

3. Antriebsanordnung (151) nach einem der Ansprüche 1 oder 2, **dadurch gekennzeichnet, dass** das Befestigungsmittel (482) die Form eines Bügels (402) mit zwei Laschen, von denen jede von einer Bohrung durchbohrt ist und fest mit der Platte (180) verbunden ist, einer Zunge (404), die fest mit dem Rahmen (156) verbunden ist und eine kreisförmige Bohrung aufweist, in der eine Kugel aufgenommen ist, die ihrerseits von einer Bohrung durchquert wird, und eines Bolzens (406), dessen Gewindeschaft jede Bohrung durchquert, annimmt.

4. Antriebsanordnung (151) nach einem der Ansprüche 1 oder 2, **dadurch gekennzeichnet, dass** das Befestigungsmittel (582) die Form einer ersten Zunge (502), die von einer Bohrung durchbohrt ist und fest mit der Platte (180) verbunden ist, einer zweiten Zunge (504), die von einer Bohrung durchbohrt ist und fest mit dem Rahmen (156) verbunden ist, eines Blocks (506), der aus einem flexiblen Material besteht, zweier Gewindeschafte, die fest mit dem Block (506) verbunden sind und auf beiden Seiten des Blocks (506) koaxial zueinander eingerichtet sind, und, für jeden Gewindeschaft, einer Mutter, die gegen die entsprechende Zunge (502, 504) gespannt wird, annimmt.

5. Antriebsanordnung (151) nach einem der Ansprüche 1 oder 2, **dadurch gekennzeichnet, dass** das Befestigungsmittel (682, 782) die Form einer Stange mit drei Befestigungspunkten annimmt, wobei jeder Befestigungspunkt eine Drehung um eine zu einer Querrichtung der Antriebsanordnung (151) parallelen Achse gestattet, wobei die Stange mit zwei Befestigungspunkten an der Platte (180) und mit einem Befestigungspunkt an dem Rahmen (156) befestigt ist.

6. Antriebsanordnung (151) nach einem der Ansprüche 1 oder 2, **dadurch gekennzeichnet, dass** das Befestigungsmittel (882) die Form einer Stange mit drei Befestigungspunkten annimmt, wobei jeder Befestigungspunkt eine Drehung um eine zu einer Längsrichtung der Antriebsanordnung (151) parallelen Achse gestattet, wobei die Stange mit zwei Befestigungspunkten an der Platte (180) und mit einem Befestigungspunkt an dem Rahmen (156) befestigt ist.

7. Antriebsanordnung (151) nach einem der Ansprüche 1 bis 6, **dadurch gekennzeichnet, dass** die Antriebsanordnung (151) eine Gondel (149) umfasst, die aus Hauben (147) besteht, und dass die Befestigungsmittel (182) auch die Befestigung der Hauben (147) an dem Rahmen (156) gewährleisten.

8. Antriebsanordnung (151) nach Anspruch 7, **dadurch gekennzeichnet, dass** die Antriebsanordnung (151) zusätzliche Befestigungsmittel (1082) umfasst, die die Hauben (147) direkt an der Platte (180) befestigen.

9. Antriebsanordnung (151) nach einem der Ansprüche 1 bis 8, **dadurch gekennzeichnet, dass** die Platte (180) aus mehreren Teilplatten besteht, die entlang einer Längsrichtung der Antriebsanordnung (151) hintereinander angeordnet sind, und wobei jede Teilplatte mit Hilfe von Befestigungsmitteln (182) an dem Rahmen (156) befestigt ist.

10. Antriebsanordnung (151) nach Anspruch 9, **dadurch gekennzeichnet, dass** der Elektromotor (154a) mit dem Propeller (152) von der vordersten Teilplatte getragen wird.

11. Flugzeug (100), das mindestens eine Antriebsanordnung (151) nach einem der vorhergehenden Ansprüche umfasst.

## Claims

1. Propulsion unit (151) for an aircraft (100) comprising:
- a hollow chassis (156) with an opening (162) in the bottom,
- a propulsion system (150) comprising the following propulsion elements: an electric motor (154a) with a drive shaft bearing a propeller (152), a fuel cell (154b) providing electrical power to the electric motor (154a), a tank (154c) feeding hydrogen gas to the fuel cell (154b), and a cooling system (154d),
the propulsion unit being **characterized in that** it further comprises at least one platform (180), in which said or each platform (180) is fastened to said chassis (156) through said opening (162) using fasteners (182) and in which at least one propulsion element (154a-d) of the propulsion system (150) is fastened to said or each platform (180).

2. Propulsion unit (151) according to Claim 1, **characterized in that** the chassis (156) comprises a plurality of arches (158) arranged one after the other and, between two successive arches (158), beams (160a-b) fastened at the ends to the two successive arches (158), in which each arch (158) is open at the bottom, and in which, for two successive arches (158), the two port-side lower ends of the two arches (158) are linked by a lower beam (160b) and the two starboard-side lower ends of the two arches (158) are linked by another lower beam (160b).

3. Propulsion unit (151) according to one of Claims 1 or 2, **characterized in that** the fastener (482) is a two-legged yoke (402), each leg having a bore and being rigidly connected to the platform (180), a tab (404) rigidly connected to the chassis (156) that has a spherical bore containing a sphere, which is in turn traversed by a bore, and a bolt (406) with a threaded stem that passes through each bore.

4. Propulsion unit (151) according to one of Claims 1 or 2, **characterized in that** the fastener (582) comprises a first tab (502) that contains a bore and is rigidly connected to the platform (180), a second tab (504) that contains a bore and is rigidly connected to the chassis (156), a block (506) made of a flexible material, two threaded stems rigidly connected to said block (506) and arranged coaxially with one another on both sides of the block (506), and a nut for each threaded stem that is tightened against the corresponding tab (502, 504).

5. Propulsion unit (151) according to one of Claims 1 or 2, **characterized in that** the fastener (682, 782) is a connecting rod with three fastening points, in which each fastening point enables rotation about an axis parallel to a transverse direction of the propulsion unit (151), in which the connecting rod is fastened by two fastening points to the platform (180) and by one fastening point to the chassis (156).

6. Propulsion unit (151) according to one of Claims 1 or 2, **characterized in that** the fasteners (882) are a connecting rod with three fastening points, in which each fastening point enables rotation about an axis parallel to a longitudinal direction of the propulsion unit (151), in which the connecting rod is fastened by two fastening points to the platform (180) and by one fastening point to the chassis (156).

7. Propulsion unit (151) according to one of Claims 1 to 6, **characterized in that** said propulsion unit (151) comprises a nacelle (149) made of cowlings (147), and **in that** the fasteners (182) also fasten the cowlings (147) to the chassis (156).

8. Propulsion unit (151) according to Claim 7, **characterized in that** said propulsion unit (151) comprises additional fasteners (1082) that directly fasten the cowlings (147) to the platform (180).

9. Propulsion unit (151) according to one of Claims 1 to 8, **characterized in that** the platform (180) is made of several sub-platforms arranged one behind the other in a longitudinal direction of the propulsion unit (151), and in which each sub-platform is fastened to the chassis (156) using fasteners (182).

10. Propulsion unit (151) according to Claim 9, **characterized in that** the electric motor (154a) with the propeller (152) is carried by the frontmost sub-platform.

11. Aircraft (100) comprising at least one propulsion unit (151) according to one of the preceding claims.
